# EUROPEAN PATENT SPECIFICATION

(11) **EP 1 564 943 B1**
(45) Date of publication and mention of the grant of the patent: **06.06.2012**
(21) Application number: 05270002.8
(22) Date of filing: 11.02.2005
(51) Int. Cl.: H04L 12/56, H04L 12/28, H04B 7/26

(54) **Wireless Communication Terminal, System and Method**
Drahtloses Kommunikationsendgerät, System und Verfahren
Terminal de communication sans fil, système et procédé

(30) Priority: 14.02.2004 GB 0403299
(43) Date of publication of application: 17.08.2005
(73) Proprietor: Motorola Solutions, Inc., Schaumburg IL 60196 (US)
(72) Inventor: Bar, Eitan, 67899, Tel Aviv (IL); Berman, Leonid, 67899, Tel Aviv (IL); Portnik, IIya, 67899, Tel Aviv (IL)
(74) Representative: Treleven, Colin

(56) References cited:
- WO-A-03/010902
- GB-A- 2 362 292

## Description

### Field of the Invention

The present invention relates to a wireless communication terminal, system and method. In particular, it relates to an improved procedure to use a frequency resource efficiently in a wireless communication system. The inventive concepts are applicable to, but not limited to, a direct mode communication system and method of synchronisation of multiple communication channels.

### Background of the Invention

Wireless communication systems, for example cellular telephony or private mobile radio (PMR) communication systems, typically provide for radio telecommunication links to be arranged between a number of wireless communication units, comprising both handheld and vehicle-mounted units, often referred to as mobile stations (MSs).

In a wireless private mobile radio (PMR) communication system, such as the TErrestrial Trunked RAdio (TETRA) system defined by the European Telecommunications Standards Institute (ETSI), it is known that an MS may operate outside a dedicated network coverage area by communicating in a direct communication link with at least one other MS. Such a communication mode is generally referred to as Direct Mode Operation (DMO). This term is in contrast to Trunked Mode operation (TMO) that enables the MS to work within network coverage, with communications controlled and facilitated by a switching and management infrastructure (SwMI). Hence, when an MS operates in DMO, there is no system controller and therefore no centralised timing synchronisation, to synchronise the timing of communications between MSs. Synchronisation within DMO occurs only on a particular carrier, where a receiving (slave) MS synchronises their transmissions to the calling (master) MS. DMO is therefore often referred to as a single carrier synchronised mode of operation.

When, for example, TETRA DMO is employed in remote areas where the RF carrier is a limited resource, a Frequency Efficient (FE) mode is the solution supported by the TETRA standard (as described in ETSI's ETS 300 396-3 TETRA DMO part 3: MS-MS Air Interface protocol). Using this mode, two independent Direct Mode (DM) calls, serving two different talk-groups, are supported on a single RF carrier.

However, a significant disadvantage with using an FE mode is that it is only supported for a single carrier, i.e. the very same RF carrier on which the MS is attached at the moment that the service is required. The inventors of the present invention have recognised and appreciated that by limiting the use of FE to a single carrier only, per MS, the solution fails to offer a truly efficient use of all DM RF carriers that may be in use.

The current TETRA standard also defines a mechanism to utilise an already "in-use" frequency resource by interrupting an ongoing call using call pre-emption. The pre-emption procedure is described in the TETRA standard, in ETSI EN 300 369-3 - Part 3: Mobile Station to Mobile Station (MS-MS) Air Interface (AI) protocol. The pre-emption:procedure allows any DM MS, whether it belongs to the group for which a call is being conducted or to some other group, to send to the Master MS of the ongoing call a special dedicated protocol data unit (PDU). The special dedicated PDU is sent on pre-determined time slots to indicate that a higher priority call has to be executed. The Master MS, upon receiving the request, leaves the channel and transmits an appropriate signalling message to indicate to the members of the group (for the ongoing call), and the requestor, that the call is being released and the pre-emption request has been granted. As soon as the Master MS finishes transmitting this signalling message, the originating pre-emptor starts the standard call set-up procedures.

Thus, in summary, the known call pre-emption procedure is the only available mechanism for an MS that wishes to initiate a call and its current RF carrier is busy with another call. It has the disadvantage of ending an ongoing call when an acceptable resource on another RF carrier may be available. In addition to this, the call pre-emption mechanism may be initiate only for a call with higher priority than that of the ongoing one.

Thus, there exists a need to provide a wireless communication unit, a wireless communication system, and a protocol and method of efficiently using a frequency resource wherein the aforementioned disadvantages may be alleviated.

WO-A-03/010902 describes a wireless communication system in which a repeater terminal in a trunked part of the communication system derives synchronisation of signals for use in communication with other communication terminals in a direct mode.

GB-A-2,362,292 describes a method of direct mode communication between RF transceivers wherein when a first transceiver is transmitting on a channel on a given carrier frequency other RF transceivers listening to the channel can synchronise with it to facilitate setting up of a conference call arrangement.

### Summary of the Invention

In accordance with a first aspect of the present invention there is provided a wireless communication terminal in accordance with claim 1 of the accompanying claims.

An existing transmission on a first TDMA direct mode channel:dictates a timing of transmission from the terminal on another channel of a plurality of the TDMA direct mode channels available on a plurality of RF carrier frequencies.

The terminal may be a transmitting and receiving wireless communication unit or terminal, e.g. MS, operational on an unsynchronised or single carrier synchronised communication system. The wireless communication unit may comprise a signal processor operably coupled to both a transmitter and a timer function. The signal processor is desirably configured to monitor a plurality of channels and determine a timing of a transmission on a first channel of the plurality of channels and adapt a timing parameter of the timer function in response thereto, and to synchronise a transmission from the wireless communication unit on a second channel to the timing of the transmission on the first channel.

In accordance with a second aspect of the present invention, there is provided a system as defined in claim 16 of the accompanying claims.

In accordance with a third aspect of the present invention, there is provided a method as defined in claim 17 of the accompanying claims.

By the invention, as wireless communication units monitor and synchronise subsequent transmissions on a channel of any coupled carrier to active transmissions on a first channel of a first carrier, the system supports direct mode self-synchronisation.

Further features of the present invention are as defined in the dependent Claims and as disclosed in the embodiments to be described.

Embodiments of the present invention will now be described by way of example with reference to the accompanying drawings, in which:

### Brief Description of the Drawings

FIG. 1 is a block schematic diagram of a wireless communication unit adapted in accordance with preferred embodiments of the present invention;
FIG. 2 is an illustrative timing diagram of various signal sampling rates/instances, employed by a TETRA DMO communication unit in accordance with preferred embodiments of the present invention;
FIG. 3 is a flowchart of a mechanism to monitor concurrently more than one RF carrier by a TETRA DMO communication unit in accordance with the preferred embodiments of the present invention;
FIG. 4 is a flowchart illustrating a mechanism (procedure) to start a call on one of two or more RF channels by a TETRA DMO communication unit, in accordance with embodiments of the present invention;
FIG. 5 is a timing diagram illustrating an implementation procedure using one RF carrier and two channels, in accordance with embodiments of the present invention; and
FIG. 6 is a timing diagram illustrating an implementation procedure using two RF carriers and four channels, in accordance with embodiments of the present invention.

### Description of embodiments of the invention

The inventive concepts of the present invention are described as follows with reference to an unsynchronised or single carrier synchronised TETRA DMO communication system. In summary, in accordance with an embodiment of the present invention, one or more new protocol procedures and a new dedicated protocol data unit (PDU) are provided, to support for example an improved FE mechanism on one or more (up to a total of four if using the TETRA DMO protocol) additional RF carrier(s) to that currently being used by a TETRA DMO MS. Advantageously, the provision of such a mechanism increases the channel capacity of a Tetra DMO system.

Although an embodiment of the present invention is to be described with reference to a wireless TETRA DMO subscriber unit or MS, it is within the contemplation of the present invention that the inventive concepts can be applied equally to any MS-to-MS wireless DMO protocol, other wireless DMO (i.e. unsynchronised or single carrier synchronised) communication units or terminals and other timing structures.

In this specification the following expressions are intended to have the following meanings:
a) an 'idle' channel is a channel on which there is no speech or other communication between terminals currently taking place on the channel;
b) an 'attached' channel is a channel normally to be used by a particular user terminal or group of user terminals, e.g. mobile stations;
c) an 'attached' group is a group of terminals that normally use a particular channel;
d) an 'idle occupied channel' is a channel on which there is current communication activity but not by an attached terminal or group of attached terminals;
e) an 'in use' state is a state of a channel on which there is a speech or other communication taking place, either between attached terminals or unattached terminals;
f) a 'coupled' set of RF carriers are carriers that provide a set of communication channels and wherein a first communication on any of the channels on any of the carriers of the set will dictate the timing structure used in subsequent communications on all other channels of the set.
g) a 'coupled' set of channels are channels in a set on a plurality of carriers wherein a first communication on any of the channels on any of the carriers will dictate the timing structure used in subsequent communications on all other channels of the set.

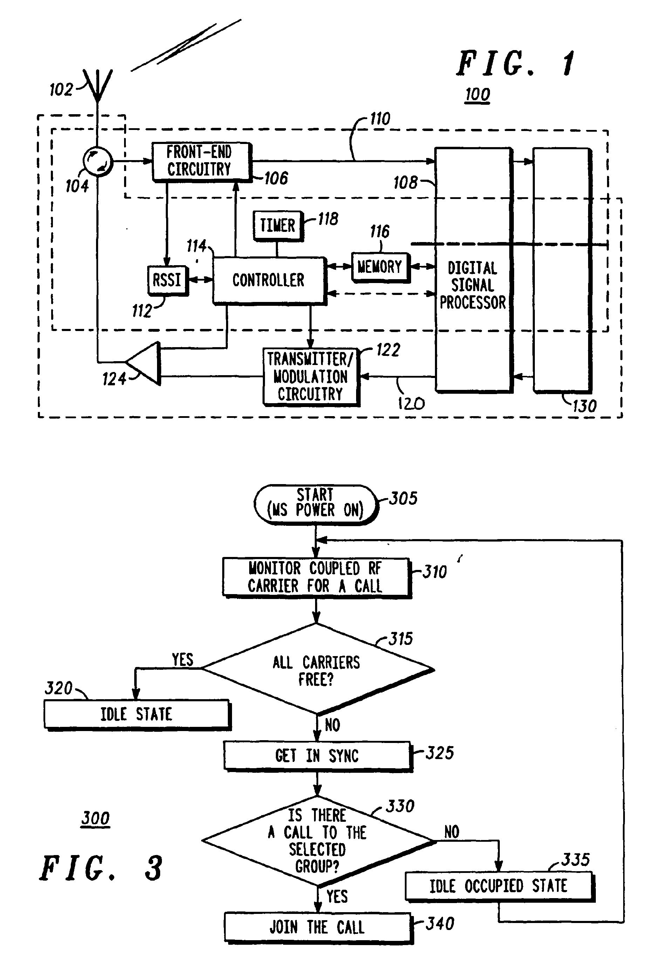

Referring now to FIG. 1, there is shown a block diagram of a mobile wireless DMO TETRA subscriber unit (MS) 100 adapted to support the inventive concepts of the preferred embodiments of the present invention. The wireless subscriber unit 100 contains an antenna 102 preferably coupled to a duplex filter or antenna switch 104 that provides isolation between a receiver chain 110 and a transmitter chain 120 within the wireless subscriber unit 100. As known in the art, the receiver chain 110 typically includes receiver front-end circuitry 106 (effectively providing reception, filtering and intermediate or base-band frequency conversion). The front-end circuit is serially coupled to a signal processing function 108. An output from the signal processing function is provided to a user-interface 130, which may comprise a display, loudspeaker, etc.

The receiver chain 110 also includes received signal strength indicator (RSSI) circuitry 112 (shown coupled to the receiver front-end 106, although the RSSI circuitry 112 could be located elsewhere within the receiver chain 110). The RSSI circuitry 112 is coupled to a controller 114 for maintaining overall subscriber unit control. The controller 114 is also coupled to the receiver front-end circuitry 106 and the signal processing function 108 (generally realised by a digital signal processor (DSP)). The controller 114 may therefore receive bit error rate (BER) or frame error rate (FER) data from decoded signals. The controller 114 is coupled to the memory device 116 for storing operating regimes, such as decoding/encoding functions and the like. A timer function 118 is typically coupled to the controller 114 to control the timing of operations (transmission or reception of time-dependent signals) within the wireless subscriber unit 100.

As regards the transmit chain 120, this essentially includes user-interface 130 comprising elements such as a microphone, keypad, etc. coupled in series to a transmitter/modulation circuit 122. Thereafter, any transmit signal is passed through a RF power amplifier 124 to be radiated from the antenna 102. The transmitter/modulation circuitry 122 and the power amplifier 124 are operationally responsive to the controller, with an output from the power amplifier 124 coupled to the duplex filter or antenna switch 104. The transmitter/modulation circuitry 122 and receiver front-end circuitry 106 comprise frequency up-conversion and frequency down-conversion functions (not shown).

In accordance with an embodiment of the present invention, the signal processing function 108 has been adapted to adjust the timing of receiver operations, such as selecting an increased number of frequency channels to monitor. In this regard, the signal processing function 108 adapts the timing function 118 to enable the receiver to be able to receive on additional RF carriers and additional timeslots to that currently employed in the TETRA DMO MS. The frequency/timing mechanism is further described below with respect to FIG. 3 to FIG. 6.

In order to understand the context of the present invention, let us first consider the TETRA DMO timing structure as it is currently defined. The TETRA timing structure uses a time division multiple access (TDMA) protocol. The timing structure is arranged, for each frequency channel, in multi-frames, with each multi-frame comprising eighteen (rolling) time frames. Each time frame is divided into four time slots.

The above embodiment of the present invention is described with reference to utilising, say, one or two RF carriers, although a skilled artisan will appreciate that the inventive concepts can be applied to a greater number of RF carriers, depending upon the communication protocol used. The inventive concepts are preferably constructed to comply with the following five rules:
(i) The mechanism (procedure) complies with the current TETRA FE mode, i.e. each RF carrier supports two DM channels;
(ii) An MS may use either channel on either of, say, up to four RF carriers for initiating a call;
(iii) Each MS preferably has a preliminary knowledge of the RF carriers on which it may initiate/receive a call for each talk-group;
(iv) The MS is now notably configured to monitor a number, and preferably all, of the other optional/available DM channels on all RF carriers, in addition to the channels on the existing attached RF carrier. This new monitoring step is preferably performed by the signal processing function 108 during the MS's idle periods, i.e. during an 'Idle but occupied (or reserved) by others' (whether from the same talk-group or not) channel state. According to the preferred embodiment of the present invention, the attached RF carrier is used as the preferred RF carrier for setting up a call. Currently, the selection of the attached RF carrier is pre-determined. However, in accordance with the preferred embodiment of the present invention, the selection of the attached RF carrier may be pre-determined or selected at random or based on some criteria; and
(v) If any of the optional/ available DM channels on any of the DM RF carriers maintains a call, then the physical timing of all other RF carriers is derived from the very first initiated call. The current TETRA DMO standard dictates that the timing for each RF carrier by itself is derived from calls, which are being currently conducted on only that respective RF carrier. Notably, in accordance with the preferred embodiment of the present invention, several RF carriers will effectively be 'coupled together', as a call in progress on one RF carrier will set the timing for a number of others, and preferably them all.

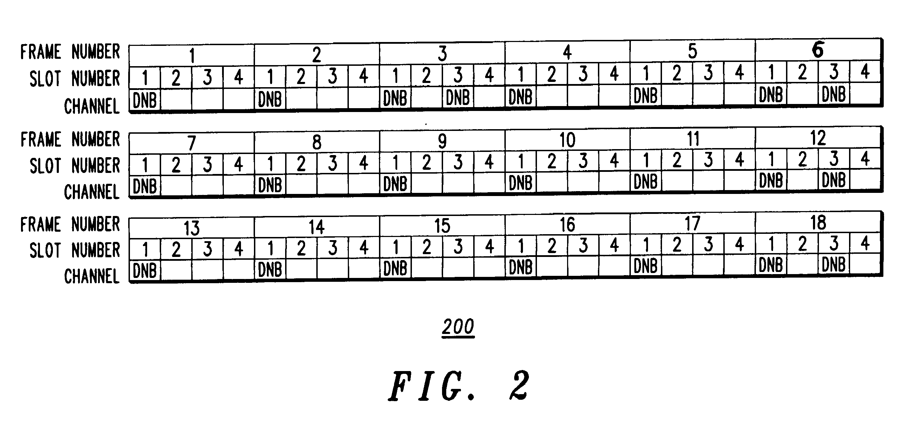

In effect, by ensuring that all optional/ available DM channels use the same time reference, the process of determining a channel state is made much easier, since the MS now has knowledge of when to look for channel status/activity. In this regard, the MS preferably looks for DMO synchronization bursts, labelled DNB in FIG. 2, on a signalling slot (slot-1 or slot-3) of frames 6, 12 and/or 18, as illustrated in the tabular form of the TETRA timing diagram 200 of FIG. 2. Here, the TETRA standard dictates that the Master MS of a call has to send a DNB during the call on such a pre-determined slot. Thus, an MS that was not 'attached' to the RF carrier at the beginning of the call, or which has lost synchronisation for whatever reason during the call, is now able to recover the timing structure following identification of a relevant DNB.

The various adapted components within the TETRA DMO MS 100 can be realised in discrete or integrated component form. More generally, the functionality associated with controlling a channel monitoring operation and organising a timing structure based around an identified active call on any of the preferred channel or any coupled channel, may be implemented in a respective communication unit in any suitable manner. For example, new apparatus may be added to a conventional communication unit, or alternatively existing parts of a conventional communication unit may be adapted, for example by reprogramming one or more processors 108 therein. As such, the required adaptation may be implemented in the form of processor-implementable instructions stored on a storage medium, such as a floppy disk, hard disk, programmable read-only memory (PROM), random access memory (RAM) or any combination of these or other storage media.

In effect, a number of the aforementioned rules are encapsulated by the flowchart 300 of FIG. 3, which indicates the preferred mechanism for monitoring channels. The process starts in step 305 with the MS powering 'on'. The MS then adopts a monitoring process according to the preferred embodiment of the present invention, whereby it monitors a number of 'coupled' RF carriers based on an identified on-going call, as shown in step 310 and described in (v) above. If the MS determines that all RF carriers are free, in step 315, it moves to an 'idle' state, in step 320. If the MS determines that any RF carrier is not free, in step 315, it employs a synchronisation process, as shown in step 325, using any standard mechanism to align its internal timing to the on-going call. If there is subsequently a call to one of its 'selected' groups on either the preferred (attached) channel or any coupled channel, in step 330, the MS is then able to join the call immediately, in step 340, as it is already synchronised to the timing of the new call - the new call having been synchronised to the earlier on-going call. The MS moves into an 'idle occupied' state, in step 335, prior to determining that a subsequent call is made. The MS then adopts a monitoring function, as shown step in step 310.

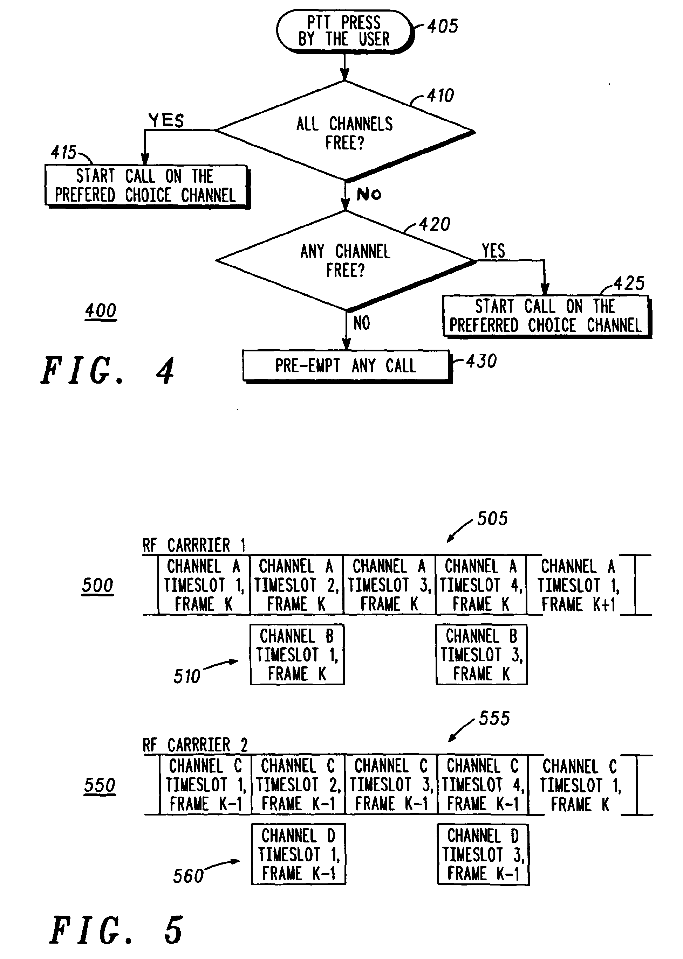

In this manner, an MS is now able to monitor concurrently more than one RF carrier to determine quickly how to synchronise to a subsequent call (say a group call) or to synchronise to another RF carrier to start a call, as illustrated below in the flowchart 400 of FIG. 4. Referring now to FIG. 4, a flowchart 400 illustrates the channel selection opportunities that are now available to a calling MS that has performed the timing initialisation/ synchronisation process described in FIG. 3. Following the MS user pressing the push-to-talk (PTT) button of the wireless communication unit in step 405, the MS determines whether any channel of the selected RF carriers is free. If all of the selected RF carriers are free in step 410, the MS starts a call on the preferred carrier choice in step 415 (and thus shall set the timing for all 'coupled' RF carriers), which may be pre-determined or random or based on some other criteria as indicated above. Alternatively, if any channel on the selected RF carriers is not free in step 410, while there is some other free channel in step 420, the MS starts a call on any coupled free channel in step 425. If there is no free channel on all coupled carriers in step 420, the MS uses the pre-emption procedure for a channel selected in step 430 according to any pre-defined criteria.

In this manner, an MS is now able to start a call on one of two or more possible channels.

Referring now to FIG. 5, a timing diagram illustrates how the inventive concepts of the present invention can be applied to a scenario with two RF carriers and four channels ('A', 'B', 'C' and 'D'). The frame timing of two RF carriers is organized as follows: Channel 'A' 505 and channel 'B' 510 are on the 1^{st} RF carrier 500, while channel 'C' 555 and channel 'D' 560 are on the 2^{nd} RF carrier 550.

The two channels within each RF carrier are configured to have a one-slot gap (in the same manner as for the standard TETRA FE mode). Notably, in accordance with the preferred embodiment of the present invention, channel 'A' 515 on the 1^{st} RF carrier 510 and channel 'C' 555 on the 2^{nd} RF carrier 550 will have a gap of exactly one frame.

Each one of the MSs operating on the same talk group (i.e. one or more wireless communication units 'affiliated' to the transmitting wireless communication unit so that a group communication can take place) will maintain the same list of possible RF carriers and its preferred '1^{st} choice' RF carrier.

If the current state of the preferred '1^{st} choice' RF carrier is such that both channels on that RF carrier are 'idle but occupied' (or reserved) in another group call, then the MS conducts a continuous monitoring of the other possible channels. In this manner, the MS is able to ensure a fast call set-up, in the case where the MS user wishes to initiate a new call to its own talk group. It is envisaged that this monitoring of other possible channels is performed in the same manner as dictated by the TETRA standard in monitoring the present active channel.

Notably, in accordance with the preferred embodiment of the present invention, the alternative channels' state is preferably determined using the following guidelines.

The basic assumption is that, as followed in a standard FE call, all available channels share the same physical timing structure. A logical multi-frame slot (MFS), which indicates the multi-frame, frame and slot of the transmission, sets the timing according to the scheme indicated in FIG. 5. Thus, in this manner, an existing call on any of the possible channels dictates the physical timing for all other calls, on all 'coupled' channels, which are initiated whilst the existing call is live. Furthermore, a call that is initiated when both of the RF carriers' initial state is free, will dictate the timing for all subsequently initiated calls on 'coupled' channels, so long as the calls are initiated whilst the first call is on-going.

According to the present TETRA DMO standard (in section 8.4.2.2.2), the requirement to facilitate an immediate call set-up on a channel for an idle MS when the preferred channel is busy (termed 'fast call set-up'), is to 'monitor and attempt to decode a DSB in timeslot-3 at least every two frames including timeslot-3 of frames '6', '12' and '18''. In accordance with the preferred embodiment of the present invention, it is proposed that the MS monitors each timeslot-3 of, say, even numbered frames on each carrier. A skilled artisan will appreciate that alternative implementations could equally look at odd-numbered frames or any other, preferably regular, periodicity. This approach improves the call set-up speed, i.e. transmitting the setup PDU immediately without delay on the air interface (AI), whilst tracking the channel at least every two frames, as dictated by the TETRA DMO standard.

The information obtained in this frequent monitoring process preferably comprises the current channel state for each of the "coupled" channels. Thus, once the user presses the PTT button, the MS is able to initiate a call on a channel known to be in a 'channel free' state. Notably, the 2^{nd} RF carrier numbering is configured to have a one frame lag compared to the 1^{st} RF carrier. This actually means, as illustrated in FIG. 5, that if the MS is monitoring slot-3 of its preferred '1^{st} choice' RF carrier (say, channel 'A') on slot-3 of frame K, then, channel 'B' is monitored on slot-4 of frame K, and coupled channel 'C' is then monitored on slot-3 of frame 'K-1' (in terms of RF carrier-1 numbering). Furthermore, coupled channel 'D' is then monitored on slot-4 of frame 'K-1' (again in terms of RF carrier-1 numbering).

Notably, the preferred embodiment of the present invention therefore monitors RF activity on an additional channel, i.e. slot-3 and slot-4 of frame 'K-1', which would be idle and not monitored under the current TETRA standard.

The current TETRA DMO standard dictates that an initial determination of a DM channels' state (e.g. following power-up of an MS) is required for a period of at least nineteen frames or until a DSB is detected. Notably in accordance with the preferred embodiment of the present invention, this scanning/monitoring requirement is extended for a number and preferably all possible channels on a number and preferably all carriers.

If the user wishes to talk (i.e. the user presses the PTT), and there is already a call on the preferred '1^{st} choice' channel and the MS has determined, for example, that channel 'C' is free, then it shall immediately start transmitting a special new dedicated protocol data unit (PDU) on channel 'C'. The purpose of this PDU is to indicate to all other MSs, which belong to the very same group, that it is about to start a call. This PDU is preferably transmitted on slot 'C' on two consecutive frames in order to signify to the other MSs from the same group to move to, and thereafter monitor only, slot 'C'. Transmitting the PDU on one frame is generally enough, since all MSs are already synchronised, with the transmission on a further frame used to ensure all MSs receive the message.

As soon as the transmission of this PDU is finished, a DM-SETUP PDU is preferably transmitted according to the standard set-up of an FE call, as described in section 8.4.5.1.1 of the TETRA DMO standard. In essence an FE call setup makes use of slot-1 and slot-3 of the RF carrier, whereas a 'normal mode' call setup makes use of all slots, i.e. slots '1-4' of the RF carrier.

In an enhanced embodiment of the present invention, it is proposed that a variant of a random access protocol is used, where call set-up times are increased in several frames in an attempt to eliminate collisions. This has, in effect, the trade-off of increasing call set-up time.

In the enhanced embodiment of the present invention, the random access protocol variant is implemented as follows. The MS does not start transmitting immediately but selects, preferably from a limited range of numbers (say, not to exceed four in the case of four available channels), an 'opportunity' number to start transmission. Preferably, the 'seed' for each MS's opportunity is based on its Individual Subscriber Station Identity (ISSI) number, to ensure that different MSs will select different opportunity numbers. Hence, each MS will start transmission on a different time slot in channel 'C'. It is also envisaged that this PDU may be relinquished if the set-up time is of high priority.

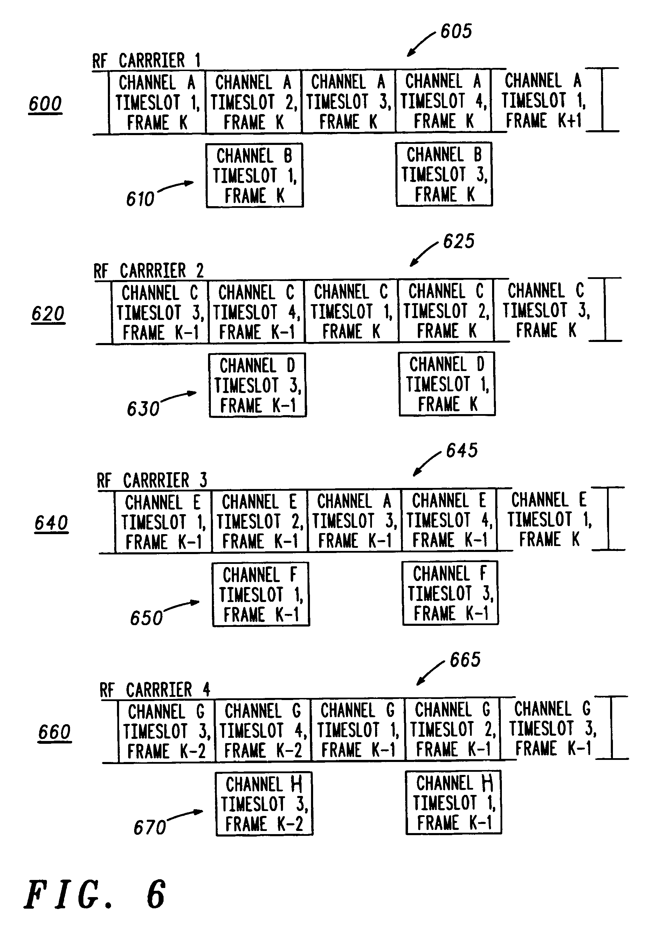

Referring now to FIG. 6, it is envisaged that the inventive concepts described above may be extended, for example for four RF carriers 600, 620, 640, 660 (i.e. 8 channels - channel 'A' 605 and channel 'B' 620 on RF carrier '1' 600, channel 'C' 625 and channel 'D' 630 on RF carrier '2' 620, channel 'E' 645 and channel 'F' 650 on RF carrier '3' 640, channel 'G' 665 and channel 'H' 670 on RF carrier '2' 660), using the same guidelines as described above.

Notably, to handle such additional carriers, the following features are preferably employed. A channel surveillance procedure duration will include a symbol time recovery (STR) sequence only, instead of being employed for the whole time slot. This enables the MS to monitor the channels for a significantly reduced amount of time, i.e. not more than one millisecond instead of fourteen milliseconds in a full one-slot duration. When this initial STR sample detects a burst of RF energy, then it is assumed that the channel may contain an on-going call and the MS then decodes the next sample over the whole time-slot duration. In effect, in order to cope with a large number of channels, it is proposed that the monitoring MS makes a quick determination of whether there is any RF activity on a slot on a channel, and if there is, the whole slot is then decoded. Again, each channel's logical MFS has a one-slot lag corresponding to the previous channel, as illustrated in FIG. 6.

As can be seen from the timing diagram for a sequence of eight consecutive slots, eight different channels can be monitored. However, in order to save battery life the receiver will not be opened for the whole time slot duration, but rather for a short sample time. This is a modification to the current requirement of the TETRA standard, which assumes whole slot monitoring. However, it is assumed that slot-3 of frame '18' of the preferred '1^{st} choice' RF carrier will be opened for the whole slot for synchronization purposes.

It will be understood that the wireless communication unit and method of monitoring and selecting a frequency resource/timing structure therein, as described above, provide at least one or more of the following advantages:
(i) A fast call set-up can be performed on more than the preferred '1^{st} choice channel';
(ii) A better use of the limited frequency resource associated with DM communications is achieved;
(iii) Once a user presses the PTT button of a MS, the MS is able to initiate a call on a channel known to be in a 'channel free' state; and
(iv) The MS may detect calls of other 'may be of interest' talk-groups rather than solely the originally attached one.

Whilst specific, and preferred, implementations of the present invention are described above, it is clear that one skilled in the art could readily apply variations and modifications of such inventive concepts.

Thus, the preferred embodiment of the present invention has provided a wireless communication system, wireless communication unit and a method of better utilising a DMO frequency resource that substantially alleviates the aforementioned problems with prior art arrangements.

## Claims

1. A wireless communication terminal (100) capable of wireless communication with other communication terminals in a direct mode of operation (DMO), wherein the wireless communication terminal is operable to transmit on one of a plurality of direct mode time division multiple access channels, and to detect whether any one of the plurality of direct mode channels is already in use, and if it is, to derive synchronisation from a timing structure of a signal on the detected channel already in use; **characterised in that** the terminal (100) is operable to monitor each of a plurality of RF carriers (500, 550) to determine whether a call is in progress on any DMO channel of each of the carriers, to derive synchronisation from a DMO channel (505) of one of the carriers (500) in which a call is detected to be in progress and to use the synchronisation to start a call on a DMO channel (555) of a different carrier (550).

2. A terminal (100) according to claim 1 which is operable to select, to start the call, the DMO channel (555) of the different carrier (550) from a plurality of DMO channels (505, 510, 555, 560) of the different carriers.

3. A terminal (100) according to claim 1 or claim 2 wherein each of the plurality of channels (555, 560) is available in a frequency efficient mode on a multi-channel RF carrier (550).

4. A terminal (100) according to any one of the preceding claims wherein the terminal is operable upon detecting that a first direct mode channel (505) is already in use and a second direct mode channel (555) is free to send on the second channel a data message to one or more other wireless communication terminals affiliated to the terminal indicating that the terminal is to initiate a call on the second channel.

5. A terminal (100) according to Claim 4 wherein the data message signifies to the one or more other wireless communication terminals affiliated to the transmitting wireless communication terminal to move to and thereafter monitor at least the second channel.

6. A terminal (100) according to any one preceding claim that is also operable to receive a wireless communication from another terminal, the terminal (100) including a signal processor (108) operably coupled to a transmitter, a receiver (106) and a timer (118), wherein the signal processor (108) is operable to monitor a plurality of the direct mode channels on different carriers and to determine a timing structure of a signal on a first channel of the plurality of channels and, in response thereto, to synchronise a signal to be transmitted from the terminal (100) on a second channel.

7. A terminal (100) according to claim 6 wherein the signal processor (108) is operable to select one or more slots from a limited number of time slots of the timing structure of the signal on the first direct mode channel to synchronise a slot timing structure of the signal to be transmitted on the second direct mode channel.

8. A terminal (100) according to claim 6 or claim 7 wherein the signal processor (108) is operable to select the second channel for transmitting using a random access procedure.

9. A terminal (100) according to any one of claims 6 to 8 wherein the signal processor (108) is operable to adapt the receiver (106) to monitor all available direct mode channels on which the terminal is operable to transmit.

10. A terminal according to any one of preceding claims 6 to 9 wherein the signal processor (108) is operably coupled to a memory (116) that stores a list of possible carrier frequencies to monitor for available channels and a preferred frequency for transmitting by the terminal.

11. A terminal (100) according to any one of preceding claims 6 to 10 wherein when the terminal is in an idle mode on an attached communication DMO channel of a first RF carrier the signal processor (108) is operable to monitor one or more other DMO channels on another RF carrier.

12. A terminal (100) according to Claim 11 wherein the signal processor (108) is operable to monitor one or more different slots of signals in one or more different DMO channels on the one or more carrier frequencies.

13. A terminal according to any one of preceding claims 6 to 12 wherein the signal processor (108) is operable to adapt the receiver (106) to receive on monitored direct mode channels only during selected time slots to detect whether or not a signal is present in those time slots.

14. A terminal (100) according to claim 13 wherein the signal processor is operable to adapt the receiver to receive on a monitored channel during a fraction of a selected time slot or a complete selected time slot in order to provide synchronisation with a signal on that channel during that time slot.

15. A terminal (100) according to any one of the preceding claims which is a mobile station configured to operate using TETRA DMO standard communication procedures.

16. A wireless communication system including a plurality of terminals each according to any one of the preceding claims.

17. A method (400) of operation in a communication system including a plurality of wireless communication terminals (100) capable of communication with one another in a direct mode of operation (DMO) on any one of a plurality of available time division multiple access direct mode channels available on each of a plurality of RF carriers, the method including at least one terminal (100) operable to transmit on one of a plurality of direct mode time division multiple access channels detecting whether any one of the plurality of direct mode channels is already in use, and if it is, deriving synchronisation from a timing structure of a signal on the detected channel already in use; and **characterised by** the terminal (100) monitoring each of a plurality of RF carriers (500, 550) to determine whether a call is in progress on any DMO channel of each of the carriers, deriving synchronisation from a DMO channel (505) of one of the carriers (500) in which a call is detected to be in progress, and using the synchronisation to start a call on a DMO channel (555) of a different carrier (550).

18. A method (400) according to claim 17 wherein each of the plurality of channels is available in a frequency efficient mode on a multi-channel RF carrier.

19. A method (400) according to claim 17 or 18 and wherein if none of the channels monitored by the terminal (100) is already in use a signal is transmitted by the terminal (100) on a first direct mode channel (505) on a first carrier frequency (500) and at least one other terminal monitors the signal, derives a synchronisation therefrom, and transmits on another direct mode channel (550) on another carrier frequency (550) a signal having a timing structure using the synchronisation.

20. A method (400) according to any one of claims 17 to 19 wherein a wireless communication terminal detects that a first direct mode channel (505) is already in use and a second direct mode channel (555) is free sends on the second channel a data message to one or more other wireless communication terminals affiliated to the terminal, indicating that the terminal is to initiate a call on the second channel (555).

21. A method (400) according to any one of claims 17 to 20 which includes monitoring for an available channel for use in a direct mode communication by a wireless communication terminal (100), wherein operation in the system includes using a timing structure including frames divided into slots, the method including monitoring by the wireless communication terminal (100) of a plurality of channels (505, 510, 555, 560) available on a plurality of RF carriers (500, 550) by monitoring a first slot and a second slot of at least a first frame on a first carrier, and a first slot and a second slot of at least a second frame on a second carrier wherein the first and second slots on each carrier are adjacent slots used in different channels and the first and second frames are adjacent frames, the overall set of channels on the first and second carriers forming a coupled set for timing purposes.

22. A method according to any one of claims 17 to 21 wherein each of the terminals is in accordance with any one of claims 1 to 15.

23. A method according to any one of claims 17 to 22 wherein the terminals communicate with one another in a direct mode of operation on one of four different carrier frequencies (600, 620, 640, 660) providing eight available channels, wherein when a first one (100) of the terminals is the first to transmit on any one (605) of the channels when the channels are all in an idle state, each other terminal derives synchronisation of a signal to be transmitted by it on another channel from a timing structure of a signal transmitted by the first one terminal.

## Patentansprüche

1. Drahtloskommunikationsendgerät (100), das imstande ist, in einem direkten Betriebsmodus (DMO) drahtlos mit anderen Kommunikationsendgeräten zu kommunizieren, wobei das Drahtloskommunikationsendgerät derart betreibbar ist, dass es auf einem Kanal aus einer Gruppe von Direktmodus-Zeitmultiplex-Kanälen sendet und feststellt, ob irgendeiner aus der Gruppe von Direktmoduskanälen schon benutzt wird, und in diesem Fall von einer Zeitsteuerungsstruktur eines Signals auf dem ermittelten schon benutzten Kanal eine Synchronisierung ableitet; **dadurch gekennzeichnet, dass** das Endgerät (100) derart betreibbar ist, dass es jeden Träger aus einer Gruppe von RF-Trägern (500, 550) überwacht, um festzustellen, ob auf irgendeinem DMO-Kanal eines jeden Trägers ein Telefonat stattfindet, um aus einem DMO-Kanal (505) eines der Träger (500), in dem ein Telefonat als stattfindend festgestellt wird, eine Synchronisierung abzuleiten und die Synchronisierung dazu zu verwenden, ein Telefonat auf einem DMO-Kanal (555) eines anderen Trägers (550) zu beginnen.

2. Endgerät (100) gemäß Anspruch 1, das derart betreibbar ist, das es, um das Telefonat zu beginnen, den DMO-Kanal (555) des anderen Trägers (550) aus einer Gruppe von DMO-Kanälen (505, 510, 555, 560) der verschiedenen Träger auswählt.

3. Endgerät (100) gemäß Anspruch 1 oder Anspruch 2, wobei jeder Kanal aus der Gruppe von Kanälen (555, 560) in einem frequenzeffizienten Modus auf einem Multikanal-RF-Träger (550) zur Verfügung steht.

4. Endgerät (100) gemäß einem der vorangehenden Ansprüche, wobei das Endgerät nach einem Feststellen, dass ein erster Direktmoduskanal (505) schon benutzt wird und ein zweiter Direktmoduskanal (555) frei ist, derart betreibbar ist, dass es auf dem zweiten Kanal an ein oder mehrere andere mit dem Endgerät assoziierte Drahtloskommunikationsendgeräte eine Datennachricht sendet, die anzeigt, dass das Endgerät ein Telefonat auf dem zweiten Kanal initiieren soll.

5. Endgerät (100) gemäß Anspruch 4, wobei die Datennachricht dem einen oder den mehreren anderen Drahtloskommunikationsendgeräten, die mit dem sendenden Drahtloskommunikationsendgerät assoziiert sind, angibt, sich auf wenigstens den zweiten Kanal zu begeben und ihn zu überwachen.

6. Endgerät (100) gemäß einem der vorangehenden Ansprüche, das außerdem derart betreibbar ist, dass es eine Drahtloskommunikation von einem anderen Endgerät empfängt, wobei das Endgerät (100) einen Signalprozessor (108) aufweist, der funktionell mit einem Sender, einem Empfänger (106) und einem Zeitgeber (118) gekoppelt ist, wobei der Signalprozessor (108) derart betreibbar ist, dass er eine Gruppe der Direktmoduskanäle auf verschiedenen Trägern überwacht und eine Zeitsteuerungsstruktur eines Signals auf einem ersten Kanal aus der Gruppe von Kanälen bestimmt und als Reaktion darauf ein von dem Endgerät (100) auf einem zweiten Kanal auszusendendes Signal synchronisiert.

7. Endgerät (100) gemäß Anspruch 6, wobei der Signalprozessor (108) derart betreibbar ist, dass er einen oder mehrere Zeitschlitze aus einer beschränkten Anzahl von Zeitschlitzen der Zeitsteuerungsstruktur des Signals auf dem ersten Direktmoduskanal auswählt, um eine Zeitschlitz-Zeitsteuerungsstruktur des auf dem zweiten Direktmoduskanal zu übertragenden Signals zu synchronisieren.

8. Endgerät (100) gemäß Anspruch 6 oder Anspruch 7, wobei der Signalprozessor (108) derart betreibbar ist, dass er den zweiten Kanal zum Senden unter Verwendung eines Direktzugriffsverfahrens auswählt.

9. Endgerät (100) gemäß einem der Ansprüche 6 bis 8, wobei der Signalprozessor (108) derart betreibbar ist, dass er den Empfänger (106) dazu einrichtet, alle verfügbaren Direktmoduskanäle, auf denen das Endgerät zu senden imstande ist, überwacht.

10. Endgerät gemäß einem der vorangehenden Ansprüche 6 bis 9, wobei der Signalprozessor (108) funktionell mit einem Speicher (116) gekoppelt ist, der eine Liste möglicher im Hinblick auf verfügbare Kanäle zu überwachender Trägerfrequenzen und eine bevorzugte Frequenz zum Senden durch das Endgerät speichert.

11. Endgerät (100) gemäß einem der vorangehenden Ansprüche 6 bis 10, wobei dann, wenn sich das Endgerät in einem Leerlaufmodus auf einem zugehörigen DMO-Kommunikationskanal eines ersten RF-Trägers befindet, der Signalprozessor (108) derart betreibbar ist, dass er einen oder mehrere DMO-Kanäle auf einem anderen RF-Träger überwacht.

12. Endgerät (100) gemäß Anspruch 11, wobei der Signalprozessor (108) derart betreibbar ist, dass er einen oder mehrere verschiedene Zeitschlitze von Signalen in einem oder mehreren verschiedenen DMO-Kanälen auf der einen oder den mehreren Trägerfrequenzen überwacht.

13. Endgerät gemäß einem der vorangehenden Ansprüche 6 bis 12, wobei der Signalprozessor (108) derart betreibbar ist, dass er den Empfänger (106) derart einrichtet, dass dieser auf überwachten Direktmoduskanälen nur während ausgewählter Zeitschlitze empfängt, um festzustellen, ob in jenen Zeitschlitzen ein Signal vorhanden ist oder nicht.

14. Endgerät (100) gemäß Anspruch 13, wobei der Signalprozessor derart betreibbar ist, dass er den Empfänger derart einrichtet, dass dieser auf einem überwachten Kanal während eines Bruchteils eines ausgewählten Zeitschlitzes oder eines vollständigen ausgewählten Zeitschlitzes empfängt, um eine Synchronisierung mit einem Signal auf jenem Kanal während jenes Zeitschlitzes zur Verfügung zu stellen.

15. Endgerät (100) gemäß einem der vorangehenden Ansprüche, welches ein Mobilgerät ist, das dazu eingerichtet ist, unter Verwendung von TETRA-DMO-Standard-Kommunikationsverfahren betrieben zu werden.

16. Drahtloskommunikationssystem mit einer Gruppe von Endgeräten, von denen jedes einem beliebigen der vorangehenden Ansprüche entspricht.

17. Verfahren (400) zum Betrieb in einem Kommunikationssystem mit einer Gruppe von Drahtloskommunikationsendgeräten (100), die imstande sind, untereinander in einem Direktbetriebsmodus (DMO) auf einem beliebigen Kanal aus einer Gruppe verfügbarer Zeitmultiplex-Direktmodus-Kanäle, die auf jedem RF-Träger aus einer Gruppe von RF-Trägern zur Verfügung stehen, zu kommunizieren, wobei das Verfahren mindestens ein Endgerät (100) aufweist, das derart betreibbar ist, dass es auf einem Kanal aus einer Gruppe von Direktmodus-Zeitmultiplex-Kanälen sendet und feststellt, ob irgendeiner aus der Gruppe von Direktmoduskanälen schon benutzt wird, und in diesem Fall eine Synchronisierung aus einer Zeitsteuerungsstruktur eines Signals auf dem festgestellten schon verwendeten Kanal ableitet; und **dadurch gekennzeichnet, dass** das Endgerät (100) jeden Träger aus der Gruppe von RF-Trägern (500, 550) überwacht, um festzustellen, ob ein Telefonat auf irgendeinem DMO-Kanal eines jeden der Träger stattfindet, eine Synchronisierung aus einem DMO-Kanal (505) eines der Träger (500), in dem ein Telefonat als im Gange befindlich festgestellt wird, ableitet und die Synchronisierung verwendet, um ein Telefonat auf einem DMO-Kanal (555) eines anderen Trägers (550) zu beginnen.

18. Verfahren (400) gemäß Anspruch 17, wobei jeder aus der Gruppe von Kanälen in einem frequenzeffizienten Modus auf einem Multikanal-RF-Träger zur Verfügung steht.

19. Verfahren (400) gemäß Anspruch 17 oder 18, wobei dann, wenn keiner der von dem Endgerät (100) überwachten Kanäle schon benutzt wird, von dem Endgerät (100) ein Signal auf einem ersten Direktmoduskanal (505) auf einer ersten Trägerfrequenz (500) gesendet wird und wenigstens ein anderes Endgerät das Signal überwacht, eine Synchronisierung daraus ableitet und auf einem anderen Direktmoduskanal (550) auf einer anderen Trägerfrequenz (550) ein Signal sendet, das eine die Synchronisierung verwendende Zeitsteuerungsstruktur aufweist.

20. Verfahren (400) gemäß einem der Ansprüche 17 bis 19, wobei ein Drahtloskommunikationsendgerät feststellt, dass ein erster Direktmoduskanal (505) bereits verwendet wird und ein zweiter Direktmoduskanal (555) frei ist, und auf dem zweiten Kanal eine Datennachricht an ein oder mehrere andere mit dem Endgerät assoziierte Drahtloskommunikationsendgeräte sendet, die anzeigt, dass das Endgerät ein Telefonat auf dem zweiten Kanal (555) initiieren soll.

21. Verfahren (400) gemäß einem der Ansprüche 17 bis 20, in dem überwacht wird, ob ein Kanal zur Verwendung in einer Direktmoduskommunikation durch ein Drahtloskommunikationsendgerät (100) zur Verfügung steht, wobei der Betrieb in dem System die Verwendung einer Zeitsteuerungsstruktur beinhaltet, die in Zeitschlitze eingeteilte Rahmen aufweist, wobei in dem Verfahren das Drahtloskommunikationsendgerät (100) eine Gruppe von auf mehreren RF-Trägern (500, 550) zur Verfügung stehenden Kanälen (505, 510, 555, 560) überwacht, indem es einen ersten Zeitschlitz und einen zweiten Zeitschlitz wenigstens eines ersten Rahmen auf einem ersten Träger überwacht und einen ersten Zeitschlitz und einen zweiten Zeitschlitz wenigstens eines zweiten Rahmen auf einem zweiten Träger überwacht, wobei der erste und der zweite Zeitschlitz auf jedem Träger benachbarte in verschiedenen Kanälen verwendete Zeitschlitze sind und wobei der erste und der zweite Rahmen benachbarte Rahmen sind, wobei die gesamte Gruppe von Kanälen auf dem ersten und dem zweiten Träger zu Zwecken der Zeitsteuerung eine gekoppelte Gruppe bilden.

22. Verfahren gemäß einem der Ansprüche 17 bis 21, wobei jedes der Engeräte ein Endgerät gemäß einem der Ansprüche 1 bis 15 ist.

23. Verfahren gemäß einem der Ansprüche 17 bis 22, wobei die Endgeräte miteinander in einem Direktbetriebsmodus auf einer von vier verschiedenen Trägerfrequenzen (600, 620, 640, 660), die acht verwendbare Kanäle zur Verfügung stellen, kommunizieren, wobei dann, wenn ein erstes (100) der Endgeräte das erste ist, das auf irgendeinem (605) der Kanäle sendet, während die Kanäle alle in einem Leerlaufzustand sind, jedes andere Endgerät aus einer Zeitsteuerungsstruktur eines von dem ersten Endgerät gesendeten Signals eine Synchronisierung eines Signals ableitet, welches von ihm auf einem anderen Kanal gesendet werden soll.

## Revendications

1. Terminal de communication sans fil (100) permettant une communication sans fil avec d'autres terminaux de communication selon un mode direct de fonctionnement (DMO), dans lequel le terminal de communication sans fil permet de transmettre sur l'un d'une pluralité de canaux à accès multiple par répartition dans le temps en mode direct, et de détecter si l'un quelconque de la pluralité de canaux en mode direct est prêt à l'utilisation, et si c'est le cas, de dériver une synchronisation à partir d'une structure de synchronisation d'un signal sur le canal détecté déjà en utilisation ; **caractérisé en ce que** le terminal (100) permet de surveiller chacune d'une pluralité de porteuses RF (500, 550) pour déterminer si un appel est en cours sur un canal DMO quelconque de chacune des porteuses, de dériver une synchronisation à partir d'un canal DMO (505) de l'une des porteuses (500) dans lequel un appel est détecté comme étant en cours et d'utiliser la synchronisation pour débuter un appel sur un canal DMO (555) d'une porteuse différente (550).

2. Terminal (100) selon la revendication 1, qui permet de sélectionner, pour débuter l'appel, le canal DMO (555) de la porteuse différente (550) parmi une pluralité de canaux DMO (505, 510, 555, 560) des différentes porteuses.

3. Terminal (100) selon la revendication 1 ou la revendication 2, dans lequel chacun de la pluralité de canaux (555, 560) est disponible dans un mode efficace de fréquence sur une porteuse RF multicanaux (550).

4. Terminal (100) selon l'une quelconque des revendications précédentes, dans lequel le terminal peut fonctionner lors de la détection qu'un premier canal en mode direct (505) est prêt à l'utilisation et qu'un second canal en mode direct (555) est libre d'envoyer sur le second canal un message de données à un ou plusieurs autres terminaux de communication sans fil affiliés au terminal indiquant que le terminal doit initier un appel sur le second canal.

5. Terminal (100) selon la revendication 4, dans lequel le message de données indique à l'un ou plusieurs autres terminaux de communication affiliés au terminal de communication sans fil émettant de se déplacer sur et ensuite de surveiller au moins le second canal.

6. Terminal (100) selon l'une quelconque des revendications précédentes, qui peut également fonctionner pour recevoir une communication sans fil d'un autre terminal, le terminal (100) comprenant un processeur de signal (108) couplé de manière fonctionnelle à un émetteur, un récepteur (106) et une horloge (118), dans lequel le processeur de signal (108) permet de surveiller une pluralité de canaux en mode direct sur différentes porteuses et de déterminer une structure de synchronisation d'un signal sur un premier canal de la pluralité de canaux et, en réponse, de synchroniser un signal à transmettre depuis le terminal (100) sur un second canal.

7. Terminal (100) selon la revendication 6, dans lequel le processeur de signal (108) permet de sélectionner un ou plusieurs intervalles parmi un nombre limité d'intervalles temporels de la structure de synchronisation du signal sur le premier canal en mode direct pour synchroniser une structure de synchronisation d'intervalle du signal à transmettre sur le second canal en mode direct.

8. Terminal (100) selon la revendication 6 ou la revendication 7, dans lequel le processeur de signal (108) permet de sélectionner le second canal pour une transmission en utilisant une procédure d'accès aléatoire.

9. Terminal (100) selon l'une quelconque des revendications 6 à 8, dans lequel le processeur de signal (108) permet d'adapter le récepteur (106) pour surveiller tous les canaux en mode direct disponibles sur lesquels le terminal peut effectuer une transmission.

10. Terminal selon l'une quelconque des revendications précédentes 6 à 9, dans lequel le processeur de signal (108) est couplé de manière fonctionnelle à une mémoire (116) qui mémorise une liste de fréquences porteuses possibles pour surveiller des canaux disponibles et une fréquence préférée pour une transmission par le terminal.

11. Terminal (100) selon l'une quelconque des revendications précédentes 6 à 10, dans lequel, lorsque le terminal se trouve dans un mode ralenti sur un canal DMO de communication associé d'une première porteuse RF, le processeur de signal (108) permet de surveiller un ou plusieurs autres canaux DMO sur une autre porteuse RF.

12. Terminal (100) selon la revendication 11, dans lequel le processeur de signal (108) permet de surveiller un ou plusieurs intervalles différents de signaux dans un ou plusieurs canaux DMO différents sur une ou plusieurs fréquences porteuses.

13. Terminal selon l'une quelconque des revendications précédentes 6 à 12, dans lequel le processeur de signal (108) permet d'adapter le récepteur (106) pour effectuer une réception sur des canaux en mode direct surveillés uniquement pendant des intervalles de temps sélectionnés afin de détecter si oui ou non un signal est présent dans ces intervalles de temps.

14. Terminal (100) selon la revendication 13, dans lequel le processeur de signal permet d'adapter le récepteur pour effectuer une réception sur un canal surveillé pendant une fraction d'un intervalle de temps sélectionné ou un intervalle de temps sélectionné entier afin de délivrer une synchronisation avec un signal sur ce canal pendant cet intervalle de temps.

15. Terminal (100) selon l'une quelconque des revendications précédentes, qui est une station mobile configurée pour fonctionner en utilisant des procédures de communication standards DMO TETRA.

16. Système de communication sans fil comprenant une pluralité de terminaux chacun selon l'une quelconque des revendications précédentes.

17. Procédé (400) de fonctionnement dans un système de communication comprenant une pluralité de terminaux de communication sans fil (100) permettant une communication avec un autre terminal dans un mode direct de fonctionnement (DMO) sur l'un quelconque d'une pluralité de canaux en mode direct à accès multiple par répartition dans le temps disponibles sur chacune d'une pluralité de porteuses RF, le procédé comprenant au moins un terminal (100) permettant une transmission sur l'un d'une pluralité de canaux à accès multiple par répartition dans le temps en mode direct en détectant si l'un quelconque de la pluralité de canaux en mode direct est prêt à l'utilisation, et si c'est le cas, en dérivant une synchronisation à partir d'une structure de synchronisation d'un signal sur le canal détecté déjà en utilisation ; et **caractérisé par** le terminal (100) surveillant chacune d'une pluralité de porteuses RF (500, 550) pour déterminer si un appel est en cours sur un canal DMO quelconque de chacune des porteuses, en dérivant une synchronisation à partir d'un canal DMO (505) de l'une des porteuses (500) dans lequel un appel est détecté comme étant en cours, et en utilisant la synchronisation pour débuter un appel sur un canal DMO (555) d'une porteuse différente (550).

18. Procédé (400) selon la revendication 17, dans lequel chacun de la pluralité de canaux est disponible dans un mode efficace de porteuse sur une porteuse RF à canaux multiples.

19. Procédé (400) selon la revendication 17 ou 18 et dans lequel si aucun des canaux surveillés par le terminal (100) n'est déjà en utilisation, un signal est transmis par le terminal (100) sur un premier canal en mode direct (505) sur une première fréquence porteuse (500) et au moins un autre terminal surveille le signal, dérive une synchronisation à partir de celui-ci, et transmet sur un autre canal en mode direct (550) sur une autre fréquence porteuse (550) un signal possédant une structure de synchronisation en utilisant la synchronisation.

20. Procédé (400) selon l'une quelconque des revendications 17 à 19, dans lequel un terminal de communication sans fil détecte qu'un premier canal en mode direct (505) est déjà en utilisation et qu'un second canal en mode direct (555) est libre d'envoyer sur le second canal un message de données à un ou plusieurs autres terminaux de communication sans fil affiliés au terminal, indiquant que le terminal doit initier un appel sur le second canal (555).

21. Procédé (400) selon l'une quelconque des revendications 17 à 20, qui comprend la surveillance d'un canal disponible pour une utilisation dans une communication en mode direct par un terminal de communication sans fil (100), dans lequel un fonctionnement dans le système comprend l'utilisation d'une structure de synchronisation comprenant des trames divisées en intervalles, le procédé comprenant la surveillance par le terminal de communication sans fil (100) d'une pluralité de canaux (505, 510, 555, 560) disponibles sur une pluralité de porteuses RF (500, 550) en surveillant un premier intervalle et un second intervalle d'au moins une première trame sur une première porteuse, et un premier intervalle et un second intervalle d'au moins une seconde trame sur une seconde porteuse dans lequel les premier et second intervalles sur chaque porteuse sont des intervalles adjacents utilisés dans différents canaux et les première et seconde trames sont des trames adjacentes, l'ensemble des canaux des première et seconde porteuses formant un ensemble complet dans des buts de synchronisation.

22. Procédé selon l'une quelconque des revendications 17 à 21, dans lequel chacun des terminaux est selon l'une quelconque des revendications 1 à 15.

23. Procédé selon l'une quelconque des revendications 17 à 22, dans lequel les terminaux communiquent les uns avec les autres dans un mode direct de fonctionnement sur une des quatre fréquences porteuses différentes (600, 620, 640, 660) délivrant huit canaux disponibles, dans lequel, lorsqu'un premier (100) des terminaux se trouve être le premier pour une transmission sur l'un quelconque (605) des canaux lorsque les canaux sont tous dans un état ralenti, chaque autre terminal dérive une synchronisation d'un signal à transmettre par lui sur un autre canal à partir d'une structure de synchronisation d'un signal transmis par le premier terminal.
